# EUROPEAN PATENT SPECIFICATION

(11) **EP 0 660 046 B1**
(45) Date of publication and mention of the grant of the patent: **01.12.1999**
(21) Application number: 94309412.8
(22) Date of filing: 16.12.1994
(51) Int. Cl.: F23R 3/26

(54) **Combustor bybass system for a gas turbine**
Umleitungsventil für die Brennkammer einer Gasturbine
Système de dérivation pour une chambre de combustion d'une turbine à gaz

(30) Priority: 22.12.1993 US 168489
(43) Date of publication of application: 28.06.1995
(73) Proprietor: Siemens Westinghouse Power Corporation, Orlando, FL 32826 (US)
(72) Inventor: Kain, Jeffrey Arthur, Chuluota, Florida 32766 (US)
(74) Representative: van Berlyn, Ronald Gilbert

(56) References cited:
- DE-A- 3 942 451
- DE-C- 4 034 711
- GB-A- 2 086 031
- US-A- 3 958 413

## Description

The present invention relates to an apparatus for causing a portion of the compressed air from the compressor section to bypass a combustor in a gas turbine so that the bypassed air enters the hot gas flow path downstream of the combustor but upstream of the turbine.

A gas turbine is comprised of a compressor section that produces compressed air that is subsequently heated by burning fuel in a combustion section. The hot gas from the combustion section is directed to a turbine section where the hot gas is used to drive a rotor shaft to produce power. The combustion section is typically comprised of a shell that forms a chamber that receives compressed air from the compressor section. A plurality of cylindrical combustors are disposed in the chamber and receive the compressed air along with the fuel to be burned. A duct is connected to the aft end of each combustor and serves to direct the hot gas from the combustor to the turbine section.

In the past, a cylindrical collar, sometimes referred to as a "clam shell," was used to join the aft end of the combustor to the forward end of the duct. The collar was longitudinally split into two halves and joined along flanges. The collar encircled the aft end of the combustor and the forward end of the duct so as to join the two components together.

In order to control the formation of oxides of nitrogen ("NOx"), considered an atmospheric pollutant, during the combustion process, it is sometimes desirable to cause a portion of the compressed air from the compressor section to bypass the combustors, especially during part-load operation. In the past, this has been accomplished by installing a butterfly type valve directly into the duct that directs the hot gas to the turbine so that a portion of the compressed air from the chamber bypasses the combustor and enters the hot gas flowing through the duct.

Unfortunately, this approach suffers from a variety of drawbacks. The duct must frequently be replaced because of the effects of thermal stress and corrosion. Hence, the incorporation of the butterfly valve directly into the duct increases the cost of maintaining the gas turbine. Second, introducing air directly into the duct at one localized spot can create distortions in the temperature profile of the hot gas flowing into the turbine section. Third, the butterfly valves are subject to leakage, resulting in a loss in thermodynamic performance when the bypassing of air is not desired.

It is therefore desirable to provide an apparatus for causing a portion of the compressed air from the compressor section to bypass the combustor and enter the hot gas flow path downstream of the combustor that.will be durable, present distortions in the gas temperature profile, and prevent unwanted leakage of air into the hot gas flow path.

Accordingly, it is the general object of the current invention to provide an apparatus for causing a portion of the compressed air from the compressor section to bypass the combustor and enter the hot gas flow path downstream of the combustor that will be durable, present distortions in the gas temperature profile, and prevent unwanted leakage of air into the hot gas flow path.

The invention consists in a gas turbine having a compressor section for producing compressed air, a combustor section in which a fuel is burned in the compressed air, thereby producing a hot gas, and a turbine section for expanding the hot gas, the combustor section and the turbine section being connected by a duct for directing hot gas produced in the combustor section to the turbine section, the gas turbine being characterized by:
the aft end of the combustor section and the front end of the duct being joined by a collar assembly;
the collar assembly having a rotating ring which cooperates with a clamping ring to cause a portion of the compressed air to bypass the combustor section and enter the hot gas downstream of the combustor section, wherein the clamping ring forms a manifold and has first inlet ports forming an inlet for said manifold and outlet ports forming an outlet for said manifold, said rotating ring having a plurality of second inlet ports disposed there-around for cooperating with said first inlet ports to allow the portion of the compressed air to bypass the combustor section.

Reference is made to prior art document GB-A 2086031 which discloses a gas turbine combustion system for use in burning high viscosity liquid fuels with fuel bound nitrogen. The system includes a fuel rich combustion zone and air supply means for directing all of the rich combustion zone inlet air flow to the combustion system through a cooling system which preheats all inlet air flow to the fuel rich zone combustion chamber; there being fuel mixing chamber-means, which mixes fuel with the preheated inlet air flow for prevaporization of the fuel, and means which directs a swirling air and fuel mixture into the fuel rich combustion zone. The system is provided with first variable geometry means which establishes a fuel/air ratio in the combustion zone with an equivalence ratio in the range of 1.2 to 2.5 to minimize emissions of oxides of nitrogen and quick quench mixer means which cools combustion products from the combustion zone and reduces them to a temperature of less than 1371°C to inhibit thermal-production of oxides of nitrogen in a fuel lean zone combustor means that receives combustion products from said quick quench mixer means for further combustion in a lean combustion zone having an equivalence ratio in the range of 0.4-0.6.

Reference is also made to prior art document US-A 3958413 which discloses a combustion apparatus employing a structure adapted to promote complete combustion and minimize undesired combustion products. The structure is adapted to control the amount of secondary air entering the combustion apparatus. The secondary air enters through air ports formed in a cylindrical sleeve positioned circumferentially about a liner wall portion also having air ports formed therein. The air ports of the sleeve and the liner wall may be aligned or not aligned to control the amount of entering secondary air.

Reference is also made to prior art document DE-A 3942451 which disclose another gas turbine combustion system.

Reference will now be made to the accompanying drawings, in which :

Figure 1 is a longitudinal cross-section through a portion of a gas turbine incorporating the bypass system of the current invention.

Figure 2 is a transverse cross-section taken through line II-II shown in Figure 1, except that the radially extending flange formed on the shell 16 has been omitted to allow viewing of the actuating ring 28 and associated components.

Figure 3 is a longitudinal cross-section taken through line III-III shown in Figure 2.

Figure 4 is an isometric view of the clamping ring portion of the collar assembly shown in Figures 1-3, looking into the upstream end.

Figure 5 is an isometric view, partially cut-away, of the clamping ring shown in Figure 4, looking into the downstream end.

Figure 6 is an isometric view of the rotating ring portion of the collar assembly shown in Figures 1-3.

Figure 7 is a detailed view of the portion of the rotating ring and clamping ring interface enclosed by the circle marked VII shown in Figure 3.

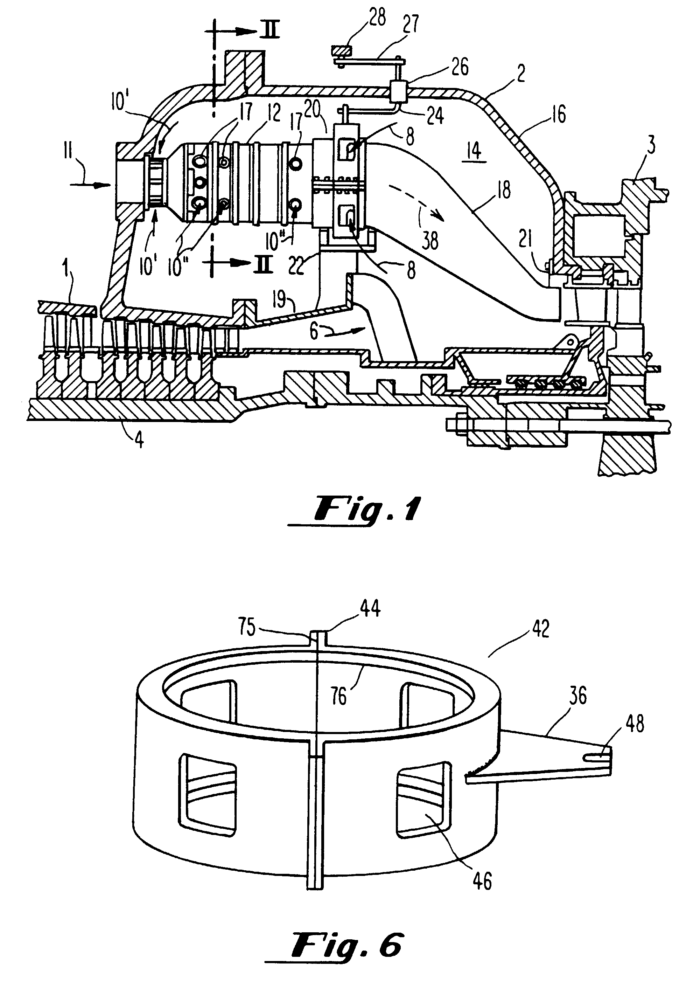

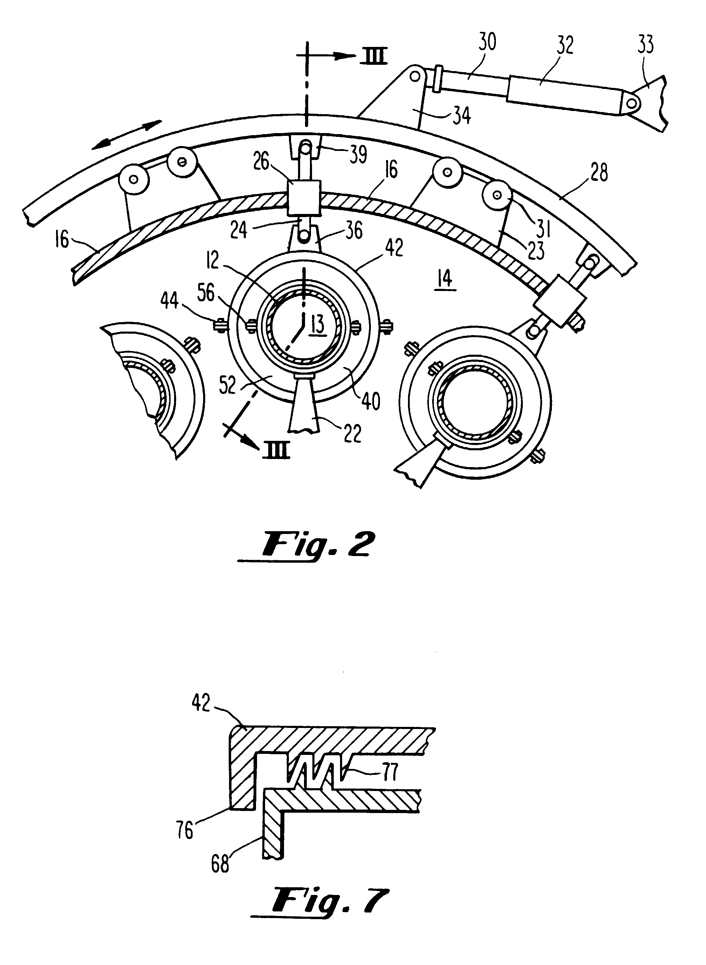

Referring to the drawings, there is shown in Figure 1 a portion of a longitudinal cross-section of a gas turbine. The gas turbine is comprised of a compressor section 1, a combustor section 2 and a turbine section 3. A rotating shaft 4 extends through the compressor, combustion and turbine sections. As is conventional, the compressor 1 is comprised of alternating rows of rotating blades and stationary vanes that compress ambient air to produce compressed air 6. As is also conventional, the combustion section 2 is comprised of a plurality of combustors 12, each of which is formed by a cylindrical liner. The combustors 12 are circumferentially arranged around the rotor 4 within a chamber 14 formed by a shell 16, as shown best in Figure 2. The front end of each combustor 12 is secured to the shell 16 via screws (not shown). The aft end of each combustor 12 is supported by a collar assembly 20, discussed further below. (As used herein the term "front" refers to axially upstream and the term "aft" refers to axially downstream.)

A portion 10' of the compressed air 6 enters each of the combustors 12 at its front end along with a supply of fuel 11, which is preferably oil or natural gas. The fuel 11 is introduced into a combustion zone 13, shown in Figure 2 and enclosed by the combustor 12, via a fuel nozzle (not shown). In the combustion zone 13 the fuel 11 is burned in the compressed air 10' to produce heat. Additional air 10'' enters the combustors 12 through holes 17 formed therein and mixes with the air 10' that has been heated by the burning of the fuel 11 to produce a flow of hot gas 38. The hot gas 38 is directed to the turbine section 3, where the hot gas is expanded, by a duct 18, sometimes referred to as a "transition duct." Thus, the combustor 12 and the duct 18 form a portion of the flow path for the hot gas 38. The aft end of each duct 18 is attached to the shell 16 by a bracket 21. The front end of each duct 18 is supported by a support bracket 22 attached to the compressor diffuser 19.

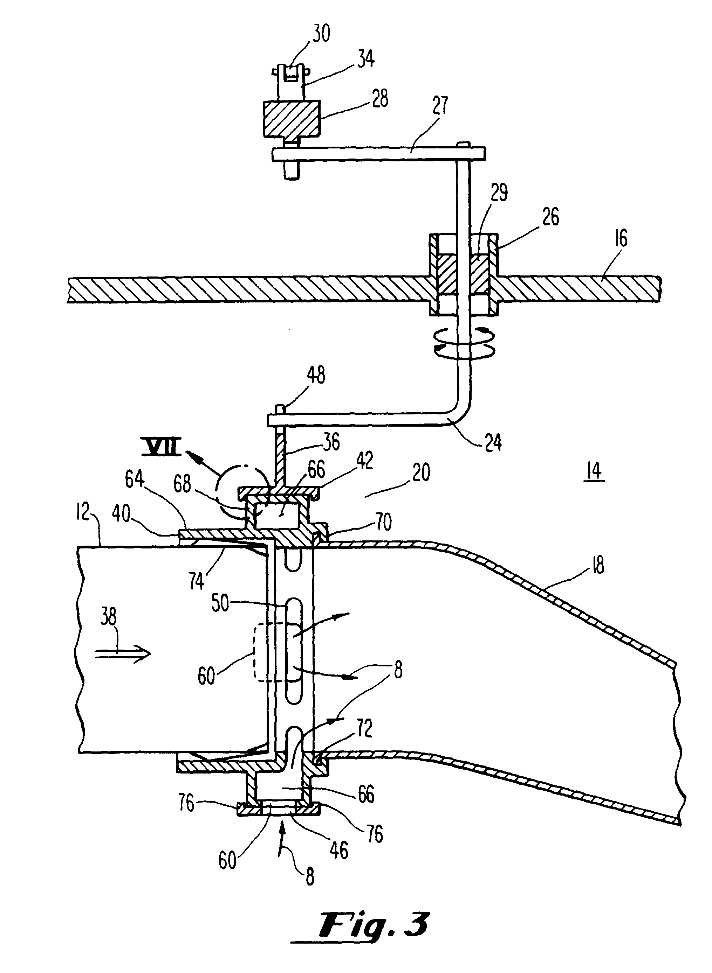

As is conventional, a portion of the compressed air 6 from the compressor 1 is drawn from the chamber 14 by piping (not shown) that discharges it directly into various components of the turbine section 3 for cooling purposes, thereby bypassing the combustors 12. However, according to the current invention, another portion 8 of the compressed air 6 from the compressor 1 is caused to bypass the combustors 12, and therefore the combustion zones 13, by directing it into the hot gas flow 38 at a location between the aft end of the combustors 12 and the front ends of the ducts 18, as shown in Figure 1. This is accomplished by means of collar assemblies 20, discussed further below. As shown in Figures 1 and 3, each collar assembly 20 joins the aft end of a combustor 12 to the front end of a duct 18. The collar assembly 20 is attached to the support bracket 22 that extends from the compressor diffuser 19.

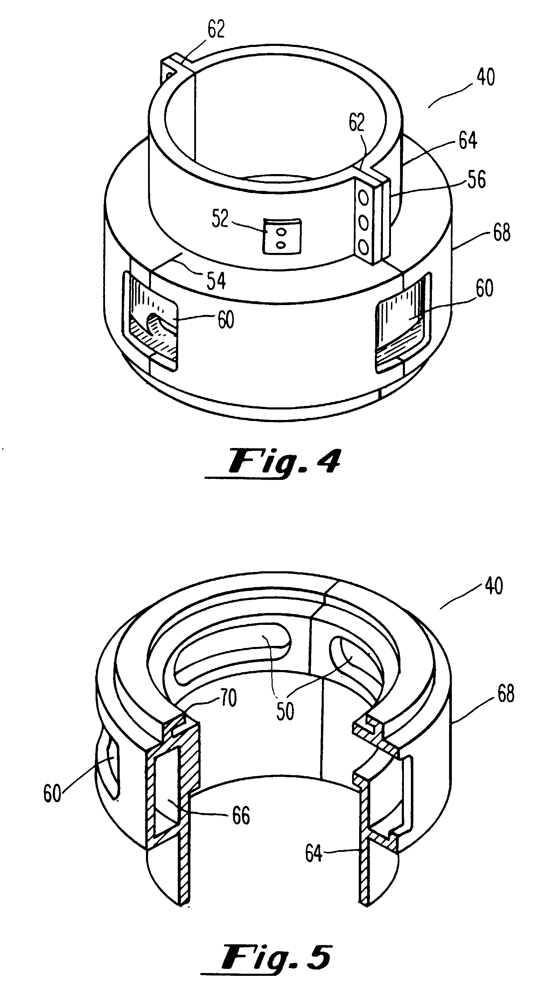

As shown in Figure 3, the collar assembly 20 is comprised of a clamping ring 40 and a rotating ring 42. As shown in Figures 4 and 5, the clamping ring 40 is comprised of an inner sleeve 64 and an outer sleeve 68 that encircles the inner sleeve. Both the inner and outer sleeves 64 and 68, respectively, are split along a longitudinal joint 62 so as to form upper and lower halves. Mating flanges 56 are formed at the joints 62 of the inner sleeve 64.

As shown in Figure 3, at assembly, the two halves of the clamping ring 40 are slipped around the aft end of the combustor 12 and the front end of the duct 18. The halves are then bolted together using bolts 58, shown in Figure 1, which extend through the flanges 56, so as to join and support the combustor 12 and the duct 18. A baffle 74 formed at the aft end of the combustor 12 is spring loaded to bear against the inner surface of the inner sleeve 64, thereby forming a seal that prevents the unwanted ingress of compressed air 6 from the chamber 14 into the hot gas 38 flow path. A lip 70 formed at the aft end of the inner sleeve 64 of the clamping ring 40 mates with a flange 72 formed at the inlet of the duct 18.

The inner and outer sleeves 64 and 68, respectively, form a manifold 66 between themselves. Outlet ports 50, in the shape of circumferentially extending slots, are distributed around the inner sleeve 64. Inlet ports 60, having an approximately square shape, are distributed around the outer sleeve 60. Radially extending expansion slots 54 are formed in the outer sleeve 68 side wall to minimize thermal stresses. A support pad 52 formed on the outer surface of the inner sleeve 64 allows the clamping ring 40 to be attached to the support bracket 22, shown in Figure 1.

As shown in Figures 3 and 6, the rotating ring 42 is split into upper and lower halves along a longitudinal joint 75, like the clamping ring 40. Mating flanges 44 are formed on the upper and lower halves at the joints 75. At assembly, the two halves of the rotating ring 40 are slipped around the clamping ring 40 so that the rotating ring encircles the outer sleeve 68 of the clamping ring, as shown in Figure 3. The two halves of the rotating ring 42 are then bolted together using bolts 58, shown in Figure 1, which extend through the flanges 44.

The inside diameter of the rotating ring 42 is larger that the outside diameter of the outer sleeve 68 so that when fully assembled the rotating ring remains free to slide on the outer sleeve. Lips 76 formed on each end of the rotating ring 42 prevent axial motion of the rotating ring but allow it to slide by rotating circumferentially around the outer sleeve. Approximately square shaped ports 46, having the same size and shape as the inlet ports 60 in the clamping ring outer sleeve 68, are distributed around the circumference of the rotating ring 42.

A lug 36 extends radially from the rotating ring 42. The lug has a slot 48 formed in its distal end. As shown in Figure 3, an L-shaped actuating rod 24 slides within the slot 48 so that rotation of the actuating rod around its radial axis causes the rotating ring 42 to rotate around the outer sleeve 68 of the clamping ring 40. When the rotating ring 42 is rotated into a first position, shown in Figure 3, the ports 46 in the rotating ring 42 are radially aligned with the inlet ports 60 in the clamping ring outer sleeve 68. This allows the portion 8 of the compressed air to flow from the chamber 14 into the manifold 66. From the manifold 66 the air 8 flows through the outlet ports 50 of the inner sleeve 64 and into the hot gas 38 flowing into the duct 18.

Note that by using the square shaped inlet ports 46 and 60 to feed the manifold 66 and the slot shaped outlet ports 50, a large flow area is created with a relatively short axial length gap between the combustor 12 and the duct 18, thereby minimizing the length of the combustion section and allowing the collar assembly 20 to be retrofitted onto existing gas turbines. Also, the relatively long circumferential length of the slots 50 allows the air from the manifold 66 to be well distributed circumferentially around the hot gas path, thereby minimizing distortions in the temperature profile of the hot gas 38 entering the turbine section 3.

When the rotating ring 42 is rotated into a second position, its ports 46 are not radially aligned with the clamping ring ports 60 so that the outer sleeve 68 blocks the ports 46 and prevents air from entering the hot gas flow path via the collar assembly 20. Labyrinth type seals 77, shown in Figure 7, may be formed between the rotating ring 42 and the outer sleeve 68 to minimize any unwanted leakage of air through collar assembly 20 when the rotating ring is in the shut-off position. When the rotating ring 42 is rotated into an intermediate position, the clamping ring outer sleeve 68 will partially block the rotating ring ports 46 so that the flow rate of the compressed air 8 that bypasses the combustor 12 can be regulated.

As shown in Figure 2 an 3, the actuating rod 24 extends through the shell 16 by means of a sleeve 26. A bearing and seal assembly 29 disposed in the sleeve 26 encases the actuating rod 24 and prevents compressed air from leaking out through the sleeve. A connecting rod 27 connects the actuating rod 26 to an actuating ring 28 that encircles the shell 16. Specifically, one end of the connecting rod 27 is attached to the actuating rod 26 and the other end is attached to a slotted lug 39 that extends from the actuating ring 28. As shown in Figure 2, the actuating ring 28 is rotatably mounted on rollers 31 attached to supports 23 extending from the shell 16. A piston 30 at one end of a hydraulic cylinder 32 is attached to the actuating ring 28 by means of a bracket 34. The other end of the hydraulic cylinder 32 is attached to a stationary member (not shown) by means of a bracket 33.

Supplying hydraulic fluid (not shown) to the hydraulic cylinder 32 will cause the piston 30 to extend, thereby causing the actuating ring 28 to rotate about the shell 16 in the counter clockwise direction (when viewed in the direction of the flow of the hot gas 38). This will cause the actuating rod 24 to rotate clockwise (when viewed radially inward), which will,m in turn, cause the rotating ring 42 to rotate counter clockwise (when viewed in the direction of flow) around the clamping ring 40. A second but oppositely pointing hydraulic cylinder (not shown) can be used to effect clockwise rotation of the actuating ring 28. Alternatively the actuating ring 28 can be spring loaded to oppose the hydraulic piston 30. In any case, according to the current invention, the amount of compressed air 8 bypassing the combustors 12 can be continuously regulated, as necessary to achieve minimum Nox production, as the operating conditions of the gas turbine vary by controlling the position of the actuating ring 28.

Note that as a result of its size, location and construction, the collar assembly 20 is much less subject to deterioration than the duct 18. Thus, the additional cost associated with imparting the bypass feature to the collar assembly does not result in an increase in the recurring costs associated with maintaining the gas turbine.

## Claims

1. A gas turbine having a compressor section (1) for producing compressed air (6), a combustor section (2) in which a fuel (11) is burned in the compressed air (6), thereby producing a hot gas (38), and a turbine section (3) for expanding the hot gas (38), the combustor section (2) and the turbine section (3) being connected by a duct (18) for directing hot gas (38) produced in the combustor section (2) to the turbine section (3), the gas turbine characterized by:
the aft end of the combustor section (2) and the front end of the duct (18) being joined by a collar assembly (20);
the collar assembly (20) having a rotating ring (42) which cooperates with a clamping ring (40) to cause a portion (8) of the compressed air to bypass the combustor section (2) and enter the hot gas downstream of the combustor section (2), wherein the clamping ring (40) forms a manifold (66) and has first inlet ports (60) forming an inlet for said manifold (66) and outlet ports (50) forming an outlet for said manifold (66), said rotating ring (42) having a plurality of second inlet ports (46) disposed there-around for cooperating with said first inlet ports (60) to allow the portion (8) of the compressed air to bypass the combustor section (2).

2. The gas turbine according to claim 1, further characterized by means (28,27,24,48) for rotating the rotating ring (42) into first and second positions, the first inlet ports (60) and the second inlet ports (46) being aligned when the rotating ring (42) is in the first position to allow the portion (8) of the compressed air to bypass the combustor section (2) and being not aligned when the rotating ring (42) is in the second position to prevent the portion (8) of the compressed air from bypassing the combustor section (2).

3. The gas turbine according to claim 2, further characterized by a hydraulic cylinder (32) connected to the means (28,27,24,48) for rotating the rotating ring (42).

4. The gas turbine according to claim 3, further characterized by the outlet ports (50) being circumferentially longer than the first inlet ports (60) and the second inlet ports (46).

## Patentansprüche

1. Gasturbine mit einem Kompressorabschnitt (1) zum Herstellen von Druckluft (6), einem Brennkammerabschnitt (2), in dem ein Brennstoff (11) in der Druckluft (6) gebrannt wird, dabei eine heißes Gas (38) herstellt, und einem Turbinenabschnitt (3) zum Ausdehnen des heißen Gases (38), wobei der Brennkammerabschnitt (2) und der Turbinenabschnitt (3) durch eine Leitung (18) verbunden sind, um in dem Brennkammerabschnitt (2) hergestelltes heißes Gas (38) auf den Turbinenabschnitt (3) zu richten, wobei die Gasturbine durch folgendes gekennzeichnet ist:
das hintere Ende des Brennkammerabschnitts (2) und das vordere Ende der Leitung (18) sind durch eine Manschettenanordnung (20) verbunden;
die Manschettenanordnung (20) hat einen ich drehenden Ring (42), der mit einem Klemmring zusammenirkt, um zu verursachen, dass ein Teil der Druckluft den Brennkammerabschnitt umgeht und in das heiße Gas stromab von dem Brennkammerabschnitt (2) eintritt, worin der Klemmring (40) einen Rohrverteiler (66) bildet und erste Einlassöffnungen (60) hat, die einen Einlass für den Rohrverteiler (66) bilden und Auslassöffnungen (50), die einen Auslass für den Rohrverteiler (66) bilden, wobei der sich drehende Ring (42) eine Vielzahl von zweiten Einlassöffnungen (46) hat, die darum angeordnet sind, um mit den ersten Einlassöffnungen (60) zusammenzuwirken, um zu gestatten, dass der Teil (8) der Druckluft den Brennkammerabschnitt (2) umgeht.

2. Gasturbine nach Anspruch 1, die weiterhin durch ein Mittel (28,27,24,48) zum drehen des sich drehenden Rings (42) in erste und zweite Stellungen gekennzeichnet ist, wobei die ersten Einlassöffnungen (60) und die zweiten Einlassöffnungen (46) ausgerichtet sind, wenn der sich drehende Ring (42) in der ersten Stellung ist, um zu gestatten, dass der Teil (8) der Druckluft den Brennkammerabschnitt (2) umgeht, und die nicht ausgerichtet sind, wenn der sich drehende Ring (42) in der zweiten Stellung ist, um zu verhindern, dass der Teil der Druckluft den Brennkammerabschnitt (2) umgeht.

3. Gasturbine nach Anspruch 2, die weiterhin durch einen hydraulischen Zylinder (32) gekennzeichnet ist, der an das Mittel (28,27,24,48) zum Drehen des sich drehenden Rings (42) angeschlossen ist.

4. Gasturbine nach Anspruch 3, weiterhin dadurch gekennzeichnet, dass die Auslassöffnungen (50) peripher länger als die ersten Einlassöffnungen (60) und die zweiten Einlassöffnungen (46) sind.

## Revendications

1. Turbine à gaz comportant un groupe compresseur (1) pour produire l'air comprimé (6), un groupe de combustion (2) dans lequel un combustible (11) est brûlé dans l'air comprimé (6), ce qui produit un gaz chaud (38), et un groupe à turbine (3) assurant la dilatation du gaz chaud (38), le groupe de combustion (2) et le groupe à turbine (3) étant reliés par un conduit (18) pour diriger le gaz chaud (38) produit dans le groupe de combustion (2) du groupe à turbine (3), la turbine à gaz étant caractérisée en ce que:
l'extrémité arrière du groupe de combustion (2) et l'extrémité avant du conduit (18) étant reliés par un ensemble de collier (20);
l'ensemble de collier (20) ayant un anneau rotatif (42) qui fonctionne en coopération avec un anneau de serrage (40) pour assurer qu'une portion d'air comprimé (8) contourne le groupe brûleur (2) et fasse entrer le gaz chaud en aval du groupe brûleur (2), suivant lequel l'anneau de serrage (40) forme un distributeur (66) et prévoit des premiers orifices d'entrée (60) formant une entrée audit distributeur (66) et des orifices de sortie (50) formant une sortie dudit distributeur (66), ledit anneau de rotation (42) ayant une pluralité de deuxièmes orifices d'entrée (46) disposés à leur alentour pour la coopération avec lesdits premiers orifices d'entrée (60) de façon à permettre à la portion d'air comprimé (8) de contourner le groupe brûleur (2).

2. Turbine à gaz selon la revendication 1, caractérisée en outre par des moyens (28,27,24,48) pour la rotation de l'anneau de rotation (42) en première et deuxième positions, les premiers orifices d'entrée (60) et les deuxièmes orifices d'entrée (46) étant alignés lorsque l'anneau de rotation (42) se trouve en première position pour permettre à la portion (8) d'air comprimé de contourner le groupe de combustion (2) et de ne pas être alignée lorsque l'anneau de rotation (42) se trouve en deuxième position pour éviter que la portion d'air comprimé (8) contourne par rapport au groupe de combustion (2).

3. Turbine à gaz selon la revendication 2, caractérisée en outre par un vérin hydraulique (32) relié aux moyens (28,27,24,48) de rotation de l'anneau de rotation (42).

4. Turbine à gaz selon la revendication 3, caractérisée en outre par des orifices de sortie (50) qui s'avèrent plus long de manière circonférencielle que les premiers orifices d'entrée (60) et les deuxièmes orifices d'entrée (46).
